# EUROPEAN PATENT SPECIFICATION

(11) **EP 0 738 396 B1**
(45) Date of publication and mention of the grant of the patent: **12.04.2000**
(21) Application number: 94902161.2
(22) Date of filing: 02.12.1993
(51) Int. Cl.: G01P 15/08, G01P 15/13

(54) **A DEVICE FOR MEASURING FORCE COMPONENTS IN MONOCRISTALLINE MATERIAL, A METHOD FOR MANUFACTURING SUCH A DEVICE AND A USE OF SUCH A DEVICE**
VORRICHTUNG ZUR MESSUNG VON KRAFTKOMPONENTEN IN MONOKRISTALLINEM MATERIAL, METHODE ZUR HERSTELLUNG EINER SOLCHEN VORRICHTUNG SOWIE DEREN ANWENDUNG
DISPOSITIF DE MESURE DES COMPOSANTES DE FORCE DANS UN MATERIAU MONOCRISTALLIN, METHODE DE PRODUCTION DE CE DISPOSITIF ET MODE D'UTILISATION

(30) Priority: 03.12.1992 SE 9203648
(43) Date of publication of application: 23.10.1996
(73) Proprietor: Andersson, Gert, S-431 51 Mölndal (SE)
(72) Inventor: Andersson, Gert, S-431 51 Mölndal (SE)
(74) Representative: Hammond, Andrew David
(86) International application number: SE9301040
(87) International publication number: WO9412886

(56) References cited:
- EP-A- 0 301 816
- WO-A-89/05459
- WO-A-90/00735

## Description

The present invention relates to a device according to the preamble of Claim 1. The invention also relates to a method of manufacturing a device according to the preamble of Claim 5.

Upto this day accelerometers of the type cantilever beam with adherent mass of inertia formed from a semiconductor substrate have been built and tested for linear acceleration along a dimensional axis, of the type with open loop as well as with closed loop. The most common solution with open loop is the one comprising a cantilever beam formed from a semiconductor substrate, which has a mass of inertia attached at its free end. The beam is formed so that it has high flexibility along an axis perpendicular to the substrate surface and high flexural rigidity along all other directions. Furthermore, there are piezoresistive sensing elements on the cantilever beam. The electric resistance in such sensing elements varies when the beam bends due to the acceleration forces that act on the mass of inertia. One-axial accelerometers of the type open loop manufactured of silicon show certain disadvantages in the form of high cross sensitivity due to the centre of gravity of the mass of inertia not lying on the neutral axis of the beam. Furthermore, the cross section of the beam is not symmetrical.

A one-axial accelerometer in a semiconductor substrate with closed loop is known from Swedish patent specification SE 462997. Typical for solutions with closed loop is that the mass of inertia is brought back during acceleration and retardation with the aid of a servo to the zero position which gives higher sensitivity and linearity. One advantage with forming accelerometers in semiconductor substrate is that servo and signal processing electronics can be integrated into the same substrate. Upto this day, on measuring the acceleration along several dimensional axes with the aid of accelerometers formed in semiconductor substrate, a one-axial accelerometer had to be used for every dimensional axis. Hitherto suggested three-dimensional monolithic accelerometers use one beam for every direction, see for instance WO 90/00735. If angular acceleration and angular velocity also is sought, practical experiments have shown that two additional one-axial accelerometers are required per dimensional axis (Padgaonkar et. al., Journal of Applied Mechanics, p. 552, Sept. 1975.).

In order to achieve a complete description of a fixed body movement, nine one-axial accelerometers located in a known way relative to each other are thus required, or alternatively three three-axial accelerometers.

The present invention stretches the technology of accelerometer constructions formed from a semiconductor substrate to simultaneous measuring of linear acceleration along three dimensional axes and, depending on the configuration, with or without sensitivity to angular acceleration and angular velocity about the dimensional axes through the characteristics as are evident from the characterizing parts of the independent Claims 1 and 6. The problem with high cross sensitivity in one-axis accelerometers is solved, at the same time as manufacturing is considerably simplified. Depending on the need of the application, the invention can be integrated in several configurations on the same substrate, which makes it possible to have simultaneous coverage of several measuring ranges alternatively makes it possible to measure simultaneously linear acceleration, angular acceleration and angular velocity along three dimensional axes. Furthermore, depending on the demands for accuracy in the application, the measuring device can be formed either with open or closed loop. The use of well-developed silicon technology in the manufacturing makes mass production possible at low cost with high accuracy and reliability.

One embodiment of the device according to the invention for measuring force components in single crystal material comprises four cantilever beams, inclined at an angle to the plane normal, with adhering masses of inertia etched from a single crystal material. An example of such a material is (100)-oriented ("Miller indices"), single crystal silicon, that can be doped in order to produce conductive means where necessary. The masses of inertia are attached to the substrate via cantilever beams which all have the same angle to the plane normal but the longitudinal axes of the beams are rotated 90° relative to each other. The beams and the mass of inertia are all formed through anisotropic etching of the single crystal material.

The cantilever connections of the mass of inertia to the substrate are obtained through flexible beams that have an angle to the plane normal well-determined by the crystal structure. Thus, the angle α = 54,74° is obtained with (100) silicon substrate and (111)-beams. Through anisotropic etching from the opposite surfaces of a semiconductor substrate, thin beams inclined at the plane normal are formed, which connect the masses of inertia to the substrate. The width and the thickness of the beams are so dimensioned that high flexibility is obtained along an axis perpendicular to the respective inclined beam and high flexural rigidity along all other directions. Four beams with the same angle to the plane normal, z-axis, with the longitudinal axes rotated 90° relative to each other thus give four different bending directions where the relationship between the bending force in the respective direction and the forces along the x, y and z axes are known. Evaluation of the overdetermined equation system with four equations and three unknown gives the forces along the x, y and z axes and thereby the corresponding accelerations. By using four inclined beams instead of the necessary three, greater accuracy is given and at the same time the signal processing electronics are considerably simplified due to the symmetry of the measuring device.

By choosing a configuration where the centre of gravity for all the masses of inertia is located close to origo, a measuring device of type I is obtained, which is sensitive to accelerations along the x, y and z axes, and which is relatively insensitive to angular accelerations and angular velocity. If instead the four masses of inertia are located, two on the x axis and two on the y axis on opposite sides of origo and with the longitudinal axes of the inclined beams being directed along the coordinate axes, a measuring device of type II is obtained which is sensitive to accelerations along the x, y and z axes, and for angular accelerations, but which is insensitive to angular velocities. If the four masses of inertia are located symmetrically on a square with the longitudinal axes of the inclined beams directed along the sides of the square, a measuring device of type III is obtained which is sensitive to accelerations along the x, y and z axes, and to angular accelerations and angular velocities. By integrating all the types on the same substrate arid with the same origo for type I, II and III, all the linear accelerations, angular accelerations and angular velocities along the three dimensional axes can be calculated. Alternatively, three measuring devices of arbitrary type can be located with different origo at a known distance from each other directly on the semiconductor substrate, which also makes it possible to calculate all linear accelerations, angular accelerations and angular velocities along three dimensional axes.

A measuring device in single crystal materials accessible for manufacturing by means of well-known semiconductor manufacturing methods comprising for example photolithographic patterning and anisotropic etching gives many advantages including close tolerance control, possibility to integrate all or some of the signal processing electronics in one single mutual substrate of relatively moderate size, and gives access to a technology which makes effective mass production possible through batch production. Furthermore, the damping of a measuring device formed of the type open loop can easily be accomplished due to the high durability against chemicals for silicon. For example, the whole measuring device with electronics and all can be placed in a damping oil of suitable viscosity. When a zero-balanced measuring device of the type closed loop is desired, patterned conductive surfaces can be located on opposite sides of the masses of inertia with so-called "Silicon Direct Bonding". This method, which has been known since 1986 (Lasky, Applied Physics Letters Vol 48, p. 78, 1986) makes bonding of for example silicon to silicon, silicon to silicon dioxide and silicon dioxide to silicon dioxide possible. "Silicon Direct Bonding" can also be used to apply mechanical stops for the cantilever beams so that these do not break if they are exposed to greater forces then they are intended for.

The invention is described in more detail herebelow with reference to the accompanying drawings, which show the device according to the invention in a three-axial embodiment with four beams, in which
Fig. 1 is a plane view of the inclined cantilever beams with adhering mass of inertia according to the invention;
Fig. 2 shows a cross-section along the line IV-IV in Fig. 1;
Fig. 3 shows a cross-section along the line IV-IV in Fig. 1 with the etch mask that is used during the anisotropic etching;
Fig. 4 shows the bending forces on the inclined beams and how these are related to the x, y and z forces;
Fig. 5 shows schematically type I, type II and type III configurations of inclined cantilever beams and masses of inertia, where all types are sensitive to accelerations along the x, y and z axes, and where type I is relatively insensitive to angular accelerations and angular velocities, type II is sensitive to angular accelerations but insensitive to angular velocities, type III is sensitive both to angular accelerations and angular velocities.

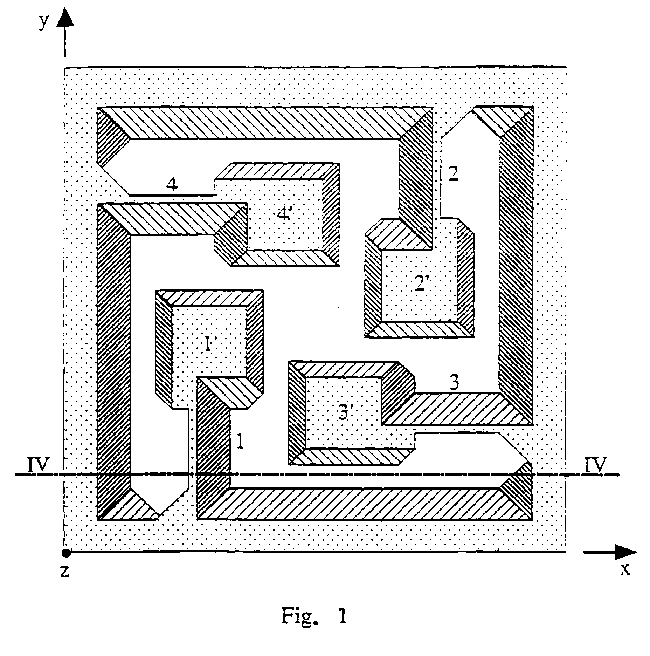

Fig. 1 shows a plane view of 4 inclined cantilever beams (1, 2, 3, 4) with adhering masses of inertia (1', 2', 3', 4'). When forming the measuring device in a (100)-oriented silicon substrate the indicated x and y axes are oriented along [110] directions and the z axes normally to the substrate surface along the [100] direction. Furthermore, on manufacturing the measuring device in a (100) silicon substrate, a thermal oxidation is first performed, which gives a protective silicon dioxide layer on the substrate surfaces. This layer is used as mask during the anisotropic etching, whereupon the silicondioxide is patterned via a photolithographic process on both substrate surfaces in such a way that the formed openings in the silicondioxide layer are aligned along the [110] directions. Alternatively, silicon nitride, gold, chromium and various other materials can be used as etch mask depending on what type of anisotropic etch solution that is used. The openings on the opposite sides are displaced relative to each other (5) where a beam is desired in such a way that the desired beam thickness is obtained after the etching. The silicon substrate is then etched through, from both sides of the substrate with an anisotropic etch that selectively etches the (111) planes that form the beams much more slowly than the (100) and (110) planes. For example, an ethylene diamine/pyrocathecol (EDP)-based etch or a potassium hydroxide (KOH)-based etch can be used for this purpose. The latter etch solutions are heated so that the desired etching effect is achieved, KOH to about 80°C and EDP to about 110°C.

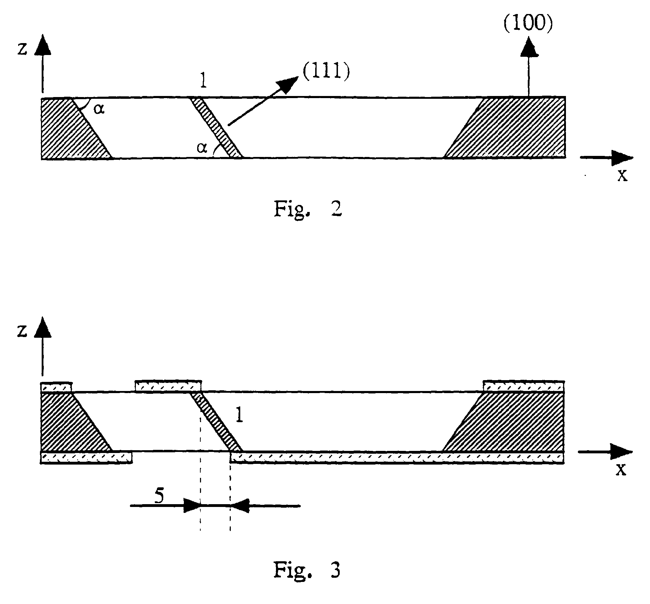

As is best seen from the cross-section IV-IV in Fig. 2 and Fig. 3, the thickness of the inclined beams are easily and most accurately defined by the photolitographic process (5). The etching is so to speak self stopping which gives high reproducibility of the beam thickness contrarily to etching processes that are stopped according to time, which is a usual method for manufacturing cantilever beams parallel to the substrate surface. It is difficult to obtain even etching speed over large areas, which means that the beam thickness can vary considerably over a wafer. The etching times are in the order of 3-4 hours and the etching speed 1-2 µm/min.

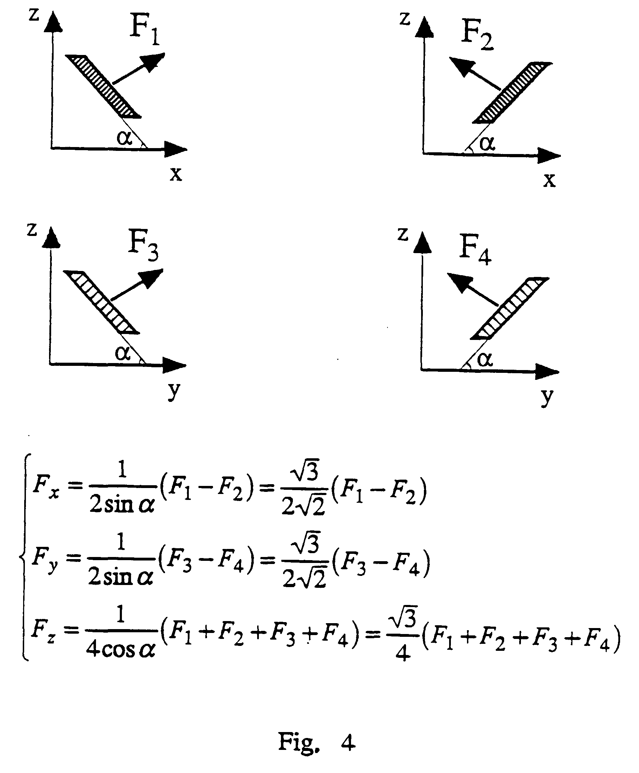

Fig. 4 shows how the bending forces F₁, F₂, F₃ and F₄ acting on the inclined beams are related to the x, y and z forces Fₓ, F_{y} and F_{z}. As is evident from the solution to the overdetermined equation system, the use of four inclined beans with the longitudinal axes rotated at 90° relative to each other instead of the necessary three, simplifies the calculation of Fₓ, F_{y} and F_{z} so it can be implemented with single resistances in conjunction with three operational amplifiers one for each force component. Manufacturing of the measuring device in a semi-conductor substrate makes it possible to integrate the signal processing electronics in the same substrate as the measuring device together with for example filter functions, other data processing electronics or servo-electronics for a measuring device of the type with closed loop.

Detection of the movements of the masses of inertia is simplest achieved by the aid of the piezoresistive effect that resistances formed through doping of silicon substrate have. To get maximum sensitivity it is suitable to use a balanced bridge connection comprising four resistances located in a suitable way. Furthermore, to get maximum piezoresistive effect the resistances shall be located where bending is the greatest. In this case the greatest bending is close to the attachment to the substrate along the normal of the inclined beam. It would therefore be optimal to place two resistances on either side of the inclined beam close to the attachment to the substrate. One alternative that gives poorer resolution, but is considerably easier to implement process-technically, is to locate one or two resistances on the upper side of the beam along the outer edge close to the attachment to the substrate and two and three, respectively, in the substrate, or alternatively one or two on the upper side and one or two on the underside of the beam.

In one embodiment of the measuring device of the type with closed loop, detection of the movements of the masses of inertia is suitably performed capacitively, as the bring back and prestressing of a mass of inertia then occurs by means of an electric field between the masses of inertia and surrounding conductive plates. It gives access to two capacitors per mass of inertia whose capacity varies with the position of the mass of inertia and a displacement of the mass of inertia can be detected by the aid of a capacity bridge, which in turn gives a signal to a servo system that changes the electric field in such a way that the mass of inertia is brought back to the zero position. For special applications, it can also be conceived to use optic detection of the movements of the masses of inertia for example by using interference phenomena or by using an arrangement where the position of a reflected light beam depends on the position of the mass of inertia.

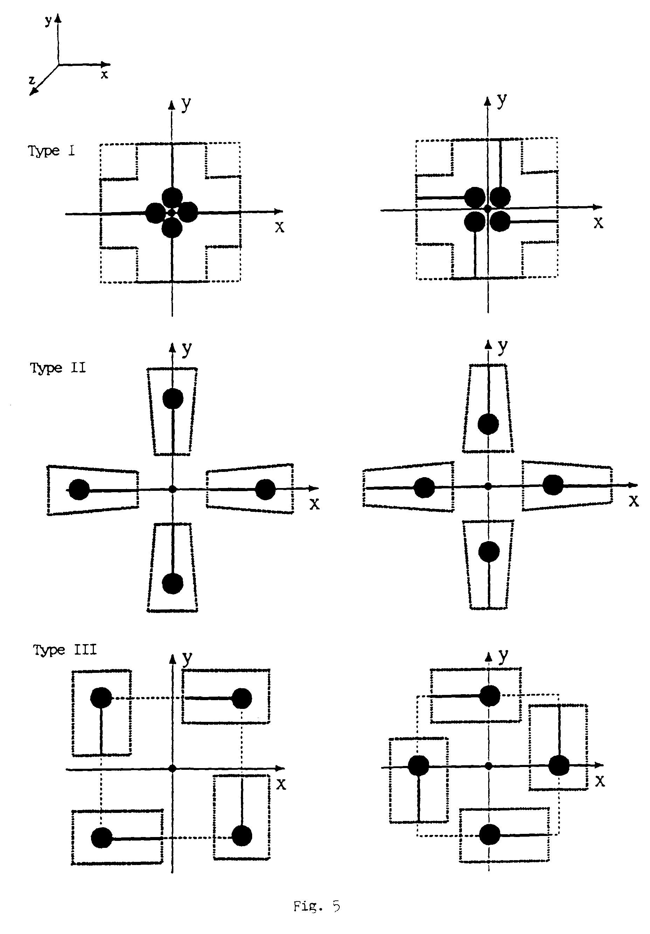

Fig. 5 shows different configurations of a measuring device sensitive to linear accelerations along the x, y and z axes comprising four inclined beams with adhering masses of inertia. Type I is an example of two configurations where the centre of gravity of the masses of inertia has been placed as close as possible to origo in order to minimize the sensitivity to angular accelerations and angular velocities (the configuration where the masses of inertia have been located symmetrically on the x and y axes is insensitive to angular velocities about the coordinate axes). Type II is an example of two configurations where the centre of gravity of the masses of inertia has been located two on the x axis and two on the y axis on opposite sides of origo and with the longitudinal axes of the inclined beams directed along the coordinate axes in order to give a measuring device which is insensitive to the angular velocity about the coordinate axes. Type III is an example of two configurations where the centre of gravity of the masses of inertia has been located symmetrically on a square with the longitudinal axes of the inclined beams directed along the sides of the square which gives a measuring device which is sensitive both to the angular acceleration and the angular velocity about the coordinate axes (the configuration where the masses of inertia have been located symmetrically on the x and y axes is insensitive to angular accelerations about the z axis).

Even if the invention has been described here in connection with one enbodiment, the invention is not limited to it. The invention is limitied only by what is stated in the claims.

## Claims

1. A semiconductor device formed from a monocrystalline semiconductor substrate having a substantially planar main surface, for measuring force components,
characterized in that it comprises:
at least one cantilever beam formed in said monocrystalline semiconductor substrate, said at least one cantilever beam having two parallel surfaces inclined non-parallel, non-perpendicular to the main substrate plane of said monocrystalline semiconductor substrate wherein inclination of the at least one cantilever beam surfaces to the main surface of said monocrystalline semiconductor substrate is achieved through etching of the monocrystalline semiconductor substrate and said surfaces of said at least one cantilever beam being defined by one crystal plane of said monocrystalline semiconductor substrate inclined non-parallel, non-perpendicular with respect to the main surface of said monocrystalline semiconductor substrate and that bending of each of the at least one cantilever beams occurs substantially along an axis perpendicular to said inclined surfaces; and
at least one mass of inertia, coupled to a corresponding one of said at least one cantilever beam.

2. The semiconductor device according to claim **1**, wherein each of said at least one mass of inertia and each of said at least one cantilever beam is manufactured from said monocrystalline semiconductor substrate.

3. The semiconductor device according to claim **2**, wherein said at least one cantilever beam comprises at least two cantilever beams, each of said at least two cantilever beams formed in equivalent crystal planes of said monocrystalline semiconductor substrate and having the same angle to the main surface of said monocrystalline semiconductor substrate, the longitudinal axes of each of said at least two cantilever beams being formed at an angle characteristic of the monocrystalline material, said at least two cantilever beams being rotated relative to each other at an angle characteristic of the monocrystalline material.

4. The semiconductor device according to claim **3**, wherein said at least one mass of inertia comprises at least two masses of inertia, each coupled to a respective one of said at least two cantilever beams, wherein said at least two cantilever beams and said at least two masses of inertia are manufactured of said monocrystalline semiconductor substrate.

5. The semiconductor device according claim **4**, wherein said monocrystalline semiconductor substrate comprises a silicon monocrystalline semiconductor substrate, said main surface of said monocrystalline semiconductor substrate lies in a (100) crystal plane, said surface of said at least one cantilever beam lies in a (111) crystal plane at an angle of substantially 54.74 degrees from the main surface of said semiconductor substrate.

6. A method for manufacturing a semiconductor device according to any one of claims 1-5 from a monocrystalline semiconductor substrate having a substantially planar main surface, for measuring force components,
characterized in that
the angle to the plane of the main surface of the cantilever beam is obtained through anisotropic etching of a single crystal material and is defined by the inclination of the crystal planes that constitute the beam, whereby the single crystal material is covered by a protective film, that thereupon portions of the protective layer are removed on opposite sides of the single crystal in such a way that the formed openings in the protective layer are aligned with the crystal structure and that the openings on opposite sides are displaced relative to each other (5) where a beam is desired in such a way that the desired beam thickness is obtained after etching, that thereupon the crystal is etched with an anisotropic etch that etches the inclined crystal planes that form the beam or beams much more slowly than the other crystal planes.

7. A method according to claim 6, for manufacturing a device comprising at least two beams,
characterized in that
the etching is so performed that all beams will be constituted by equivalent crystal planes, and so that the longitudinal axes of the beams will be rotated relative to each other at an angle that is given by the single crystal material.

8. A method according to claim 6 or 7,
characterized in that
the etching occurs from two equivalent opposite crystal planes of a single crystal material.

9. A method according to any one of Claims 5 to 8, **characterized** in that the cantilever beam or beams and the masses of inertia adherent to the beam or beams is or are etched in the same single crystal.

10. A method according to any one of Claims 5 to 9, **characterized** in that the device is etched from silicon.

11. Use of the device according to any one of Claims 1 to 5, **characterized** in that the device is used to detect linear acceleration and/or angular acceleration and/or angular velocity.

## Patentansprüche

1. Halbleitervorrichtung, ausgebildet durch ein monokristallines Halbleitersubstrat, das eine im wesentlichen ebene Oberfläche aufweist, zur Messung von Kraftkomponenten, dadurch gekennzeichnet, daß diese umfaßt:
Wenigstens einen Geberträger, der im monokristallinen Halbleitersubstrat ausgebildet ist, wobei wenigstens ein Geberträger zwei parallele Oberflächen aufweist, die nicht parallel geneigt und nicht rechtwinklig zur Hauptsubstratebene des monokristallinen Halbleitersubstrats sind, und wobei die Neigung wenigstens einer der Geberträgeroberflächen zur Hauptoberfläche des monokristallinen Halbleitersubstrats durch Ätzung des monokristallinen Halbleitersubstrats erhalten wird, daß die Oberflächen wenigstens eines Geberträgers durch eine Kristallebene des monokristallinen Halbleitersubstrats definiert ist, die nicht parallel geneigt und nicht rechtwinklig im Hinblick auf die Hauptoberfläche des monokristallinen Halbleitersubstrats ist, daß ein Biegen jedes der wenigstens eines der Geberträger im wesentlichen längs einer Achse rechtwinklig zu den geneigten Oberflächen geschieht, und wenigstens eine träge Masse, die an einen wenigstens des einen korrespondierenden Geberträgers gekoppelt ist.

2. Halbleitervorrichtung nach Anspruch 1, bei der jede der wenigstens einen der trägen Massen und jeder der wenigstens einen der Geberträger aus einem monokristallinen Halbleitersubstrat hergestellt ist.

3. Halbleitervorrichtung nach Anspruch 2, bei der wenigstens ein Geberträger wenigstens zwei Geberträger umfaßt, wobei jeder der wenigstens zwei Geberträger in äquivalenten Kristallebenen des monokristallinen Halbleitersubstrats ausgebildet ist und denselben Winkel zur Hauptoberfläche des monokristallinem Halbleitersubstrats aufweist, und wobei die Längsachsen jedes der wenigstens zwei Geberträger in einem Winkel ausgebildet sind, der charakteristisch für das monokristalline Material ist, und daß wenigstens zwei Geberträger relativ zueinander in einem Winkel gedreht sind, der charakteristisch für das monokristalline Material ist.

4. Halbleitervorrichtung nach Anspruch 3, bei der wenigstens eine träge Masse wenigstens zwei träge Massen umfaßt, wobei jede an einen jeweiligen der wenigstens zwei Geberträger gekoppelt ist, und wobei wenigstens zwei Geberträger und wenigstens zwei träge Massen durch das monokristalline Halbleitersubstrat hergestellt sind.

5. Halbleitervorrichtung nach Anspruch 4, bei dem das monokristalline Halbleitersubstrat ein monokristallines Silizium-Halbleitersubstrat umfaßt, wobei die Hauptoberfläche des monokristallinen Halbleitersubstrats in einer (100) Kristallebene liegt, und wobei die Oberfläche wenigstens eines Geberträgers in einer (111) Kristallebene mit einem Winkel von im wesentlichen 54, 74 ° von der Hauptoberfläche des Halbleitersubstrats liegt.

6. Verfahren zur Herstellung einer Halbleitervorrichtung nach einem der Ansprüche 1 bis 5, aus einem monokristallinen Halbleitersubstrat, das eine im wesentlichen ebene Hauptoberfläche aufweist, zur Messung von Kraftkomponenten, dadurch gekennzeichnet, daß der Winkel zur Ebene der Hauptoberfläche des Geberträgers durch anisotropisches Ätzen eines Einkristallmaterials erhalten wird und durch die Neigung bzw. Orientierung der Kristallebenen definiert ist, die den Träger bilden, wobei das Einkristallmaterial durch einen Schutzfilm umhüllt ist, daß nachfolgend Teile der Schutzschicht an gegenüberliegenden Seiten des Einkristalls derart entfernt werden, daß die gebildeten Öffnungen der Schutzschicht mit der Kristallstruktur fluchten, daß die Öffnungen an gegenüberliegenden Seiten relativ zueinander (5) versetzt sind, wo ein Träger gefordert wird, und zwar derart, daß die gewünschte Trägerdicke nach dem Ätzen erhalten wird, und daß daraufhin der Kristall mittels einer anisotropischen Ätzung geätzt wird, die die geneigten Kristallebenen ätzt, die den Träger oder die Träger sehr viel langsamer bildet bzw. bilden als die äußeren Kristallebenen.

7. Verfahren zur Herstellung einer Vorrichtung nach Anspruch 6, umfassend wenigstens zwei Träger, dadurch gekennzeichnet, daß das Ätzen derart ausgeführt wird, daß alle Träger durch äquivalente Kristall ebenen gebildet werden, so daß alle Längsachsen der Träger relativ zueinander in einem Winkel gedreht sind, der durch das Einkristallmaterial bestimmt wird.

8. Verfahren nach Anspruch 6 oder 7, dadurch gekennzeichnet, daß das Ätzen von zwei äquivalenten gegenüberliegenden Kristallebenen eines Einkristallmaterials aus geschieht.

9. Verfahren nach einem der Ansprüche 5 bis 8, dadurch gekennzeichnet, das der oder die Geberträger und die trägen Massen, die an dem Träger oder den Trägern haften, in derselben Einkristallebene geätzt ist bzw. sind.

10. Verfahren nach einem der Ansprüche 5 bis 9, dadurch gekennzeichnet, das die Vorrichtung aus Silizium geätzt wird.

11. Verwendung einer Vorrichtung nach einem der Ansprüche 1 bis 5, dadurch gekennzeichnet, daß die Vorrichtung dazu verwendet wird, eine lineare Beschleunigung und/oder eine Winkelbeschleunigung und/oder eine Winkelgeschwindigkeit zu erfassen.

## Revendications

1. Dispositif semi-conducteur formé à partir d'un substrat semi-conducteur monocristallin ayant une surface principale essentiellement plane, pour mesurer des composantes de force,
caractérisé en ce qu'il comprend :
au moins une poutre-console formée dans ledit substrat semi-conducteur monocristallin, ladite au moins une poutre-console ayant deux surfaces parallèles inclinées non parallèles non perpendiculaires au plan principal de substrat dudit substrat semi-conducteur monocristallin, où l'inclinaison des surfaces de la au moins une poutre-console par rapport à la surface principale dudit substrat semi-conducteur monocristallin est obtenue par gravure du substrat semi-conducteur monocristallin et ladite surface de ladite au moins une poutre-console étant définie par un plan cristallin dudit substrat semi-conducteur monocristallin incliné non parallèle, non perpendiculaire à la surface principale dudit substrat semi-conducteur monocristallin et le pliage de chacune de la au moins une poutre-console a lieu essentiellement selon un axe perpendiculaire à ladite surface inclinée, et
au moins une masse d'inertie, couplée à une masse correspondante de ladite au moins une poutre-console.

2. Dispositif semi-conducteur selon la revendication 1, dans lequel chacune de ladite au moins une masse d'inertie et chacune de ladite au moins une poutre-console sont fabriquées à partir dudit substrat semi-conducteur monocristallin.

3. Dispositif semi-conducteur selon la revendication 2, dans lequel ladite au moins une poutre-console comprend au moins deux poutre-consoles, chacune desdites au moins deux poutre-consoles formées est équivalente à des plans cristallins dudit substrat semi-conducteur monocristallin et faisant le même angle avec la surface principale dudit substrat semiconducteur monocristallin, les axes longitudinaux de chacune desdites au moins deux poutre-consoles étant formés à un angle caractéristique du matériau monocristallin, lesdites au moins deux poutre-consoles faisant un angle l'une par rapport à l'autre caractéristique du matériau monocristallin.

4. Dispositif semi-conducteur selon la revendication 3, dans lequel ladite au moins une masse d'inertie comprend au moins deux masses d'inertie, chacune couplée à une masse respective desdites au moins deux poutre-consoles, dans lequel lesdites au moins deux poutre-consoles et lesdites au moins deux masses d'inertie sont fabriquées à partir dudit substrat semi-conducteur monocristallin.

5. Dispositif semi-conducteur selon la revendication 4, dans lequel ledit substrat semi-conducteur monocristallin comprend un substrat semi-conducteur monocristallin à base de silicium, ladite surface principale dudit substrat semi-conducteur monocristallin se situe dans un plan cristallin (100), ladite surface de ladite au moins une poutre-console se situe dans un plan cristallin (111) faisant un angle substantiellement de 54,74 degrés avec la surface principale dudit substrat semi-conducteur.

6. Procédé de fabrication d'un dispositif semi-conducteur selon l'une quelconque des revendications 1 à 5, à partir d'un substrat semi-conducteur monocristallin ayant une surface principale essentiellement plane, pour mesurer des composantes de forces, caractérisé en ce que :
l'angle avec le plan de la surface principale de la poutre-console est obtenu par décapage anisotrope d'un matériau monocristallin et est défini par l'inclinaison des plans cristallins qui constituent la poutre, afin que le matériau monocristal soit recouvert par un film protecteur, et qu'à la suite de quoi, des parties de la couche protectrice soient retirées des côtés opposés du monocristal de telle manière que les ouvertures formées dans la couche protectrice soient alignées avec la structure cristalline et que les ouvertures des côtés opposés soient déplacées les unes par rapport aux autres (5) où une poutre est souhaitée, de telle manière que l'épaisseur de la poutre souhaitée soit obtenue après gravure, qu'à la suite de quoi le cristal est gravé par décapage anisotrope qui décape les plans cristallins inclinés qui forment le ou les poutres beaucoup plus lentement que les autres plans cristallins.

7. Procédé selon la revendication 6, de fabrication d'un dispositif comprenant au moins deux poutres, caractérisé en ce que la gravure est réalisée de telle sorte que toutes les poutres soient constituées de plans cristallins équivalents, et que les axes longitudinaux des poutres fassent un angle les uns par rapport aux autres qui est donné par le matériau monocristallin.

8. Procédé selon la revendication 6 ou 7, caractérisé en ce que la gravure est réalisée à partir de deux plans cristallins équivalents opposés d'un matériau monocristallin.

9. Procédé selon l'une quelconque des revendications 5 à 8, caractérisé en ce que la ou les poutre-consoles et les masses d'inertie adhérent à la ou aux poutres sont gravées dans le même monocristal.

10. Procédé selon l'une quelconque des revendications 5 à 9, caractérisé en ce que le dispositif est gravé dans du silicium.

11. Utilisation du dispositif selon l'une quelconque des revendications 1 à 5, caractérisée en ce que le dispositif est utilisé pour détecter une accélération linéaire et/ou une accélération angulaire et/ou une vitesse angulaire.
